# EUROPEAN PATENT SPECIFICATION

(11) **EP 2 098 115 B1**
(45) Date of publication and mention of the grant of the patent: **01.09.2010**
(21) Application number: 09250043.8
(22) Date of filing: 08.01.2009
(51) Int. Cl.: A01K 97/02

(54) **A baiting device for use in angling**
Ködervorrichtung zur Verwendung beim Angeln
Dispositif appât pour pêche sportive

(30) Priority: 04.03.2008 GB 0804026
(43) Date of publication of application: 09.09.2009
(73) Proprietor: Fox International Group Limited, Hainault, Essex IG6 3UT (GB)
(72) Inventor: Fox, Clifford Royston, Upminster, Essex RM14 1TP (GB)
(74) Representative: Crouch, David John

(56) References cited:
- GB-A- 642 239
- GB-A- 808 439
- US-A- 3 214 858

## Description

The present invention relates to a baiting device for use in angling comprising a bait retainer having a hollow into which bait can be inserted, at least one opening of the retainer through which bait can fall from the hollow when the device is in use, a float secured to the retainer at a position away from the said opening, and a line attachment by which a line can be attached to the device, the line attachment being readily movable between two positions, one of which is at or closer to the opening and the other of which is at or closer to the float.

Such a construction has been previously proposed in which the baiting device comprises a hollow cylinder with the float at one end of the cylinder and the opening at the other. It has an annular collar which extends around the hollow cylinder and is provided with fins. The collar can slide along the hollow cylinder between the open end and the float. Line portions are each attached to respective fins at one end and are connected together at their other ends to one end of a swivel, the other end of which can be attached to a fishing line of a rod via a clip.

The intention of this construction is to ensure that when the device is cast, the connection of the line to the device is at the open end of the cylinder so that the float or nose of the device leads as the device flies through the air. When it is pulled back for retrieval, the intention is that the connection slides up to the float end of the cylinder, so as to reduce the resistance by the device to being pulled through the water. Thus if the connection remains at the open end, water will surge into the hollow, increasing the drag.

However, contrary to this intention, one of the disadvantages of such a construction is that if the outside of the hollow cylinder becomes sticky, which may well happen with the use of certain baits, it will readily jam the collar against sliding movement along the hollow cylinder. Even without such stickiness, if it is too tight a fit around the cylindrical body, it may jam through friction, whereas if it is too loose, it may get out of alignment with the hollow cylinder and jam for that reason.

The present invention seeks to provide a remedy.

Accordingly, the present invention is directed to a baiting device for use in angling as set out in the opening paragraph of the present specification, wherein the line attachment comprises at least one elongate portion directly or indirectly fixed to and extending alongside the bait retainer between two positions, one of which is at or closer to the said opening and the other of which is at or closer to the said float, and at least one ring which is threaded on to the said elongate portion so that it can slide therealong.

Preferably, the bait retainer comprises a hollow cylinder. This improves the ease with which it will fly through the air when cast.

Advantageously, the hollow cylinder has a multiplicity of through-holes through its cylindrical wall, preferably of teardrop shape with the narrower end further from the float, by means of which bait may be held in the hollow cylinder more securely until the cylinder falls into the water being fished, whereupon bait may exit from the hollow cylinder through those through-holes, as well as through the said opening.

Preferably, the float is streamlined, for example it may be hemispherical to improve the ease with which it can fly through the air when cast.

Advantageously, the device has a further such elongate portion with a further ring threaded thereon.

Progressing along the or each such elongate portion, it may turn through 180°, so that it doubles back on itself, at or adjacent to the position which is at or closer to the float. The or each ring may then be trapped in the turn when the baiting device is retrieved.

A fishing line may be connected to the or each ring. For example, respective lengths of line may be looped around the rings at one end and attached to a fishing line at the other, for example via a swivel. A further float may be provided adjacent to the swivel or respective floats may be provided, one adjacent to each ring. This facilitates the sliding of the rings towards the first-mentioned float when the device is in the water being fished.

An example of a baiting device made in accordance with the present invention will now be described in greater detail with reference to the accompanying drawings, in which:
Figure 1 shows a side view of a baiting device made in accordance with the present invention;
Figure 2 shows a perspective view of the device shown in Figure 1; and
Figure 2a shows a modified form of a part of the device shown in Figures 1 and 2.

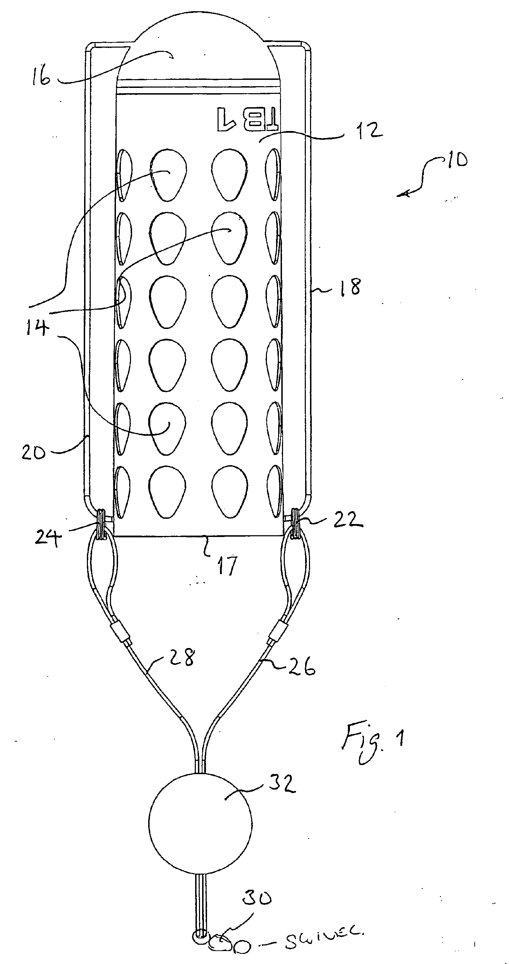

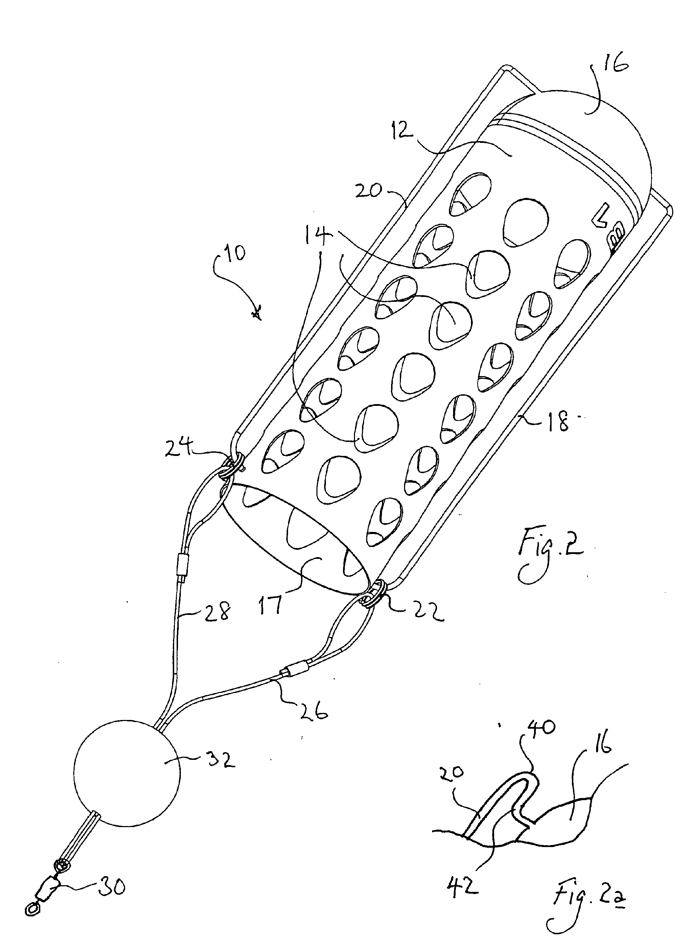

A baiting device 10 for use in angling is shown in Figures 1 and 2. It comprises a synthetic plastics injection moulded hollow cylinder 12 through the cylindrical wall of which is formed a plurality of teardrop shaped through-holes 14. The diameter of the cylinder is about 49mm and its length is about 129mm. Its wall thickness is about 1mm. Each through-hole is about 15mm long and about 12mm wide, and there are six rows of these through-holes spaced apart along the length of the cylinder 12, each row having eight through-holes spaced around the cylinder. The narrower end of each teardrop shaped hole points in the same direction as every other hole.

One end of the hollow cylinder 12 is closed by a hemispherical hard polystyrene bouyant float 16, coloured a bright yellow for high visibility, as with its hemispherical face directed away from the hollow cylinder 12. The other end of the hollow cylinder 12 is open so that it has an opening 15.

The narrower end of each teardrop is further from the float 16.

Two stainless steel wires 18 and 20 of approximately 2mm in diameter extend along and are parallel to but spaced apart from the hollow cylinder 12, and each is attached to the cylinder 12 close to the opening 17 at one of the ends, and to the float 16 at the other of its ends. Since the wires 18 and 20 are made of stainless steel and are approximately 2mm in diameter, they are unlikely to rust or bend.

Respective metal rings 22 and 24 are threaded on to the wires 18 and 20 so that the rings 22 and 24 are slidable along the wires 18 and 20 respectively.

Two lengths of line 26 and 28 are looped respectively through the rings 22 and 24. Their opposite ends are attached to one end of a swivel 30. Between the rings 22 and 24 and the swivel 30 each length of line 26 and 28 passes through and is secured to a second float 32.

In the modification shown in Figure 2a, progressing along each wire 18 or 20, it may turn through 180°, so that it doubles back on itself, at position 40 adjacent to the float 16. The wire then turns through 90° at position 42 towards the float 16 to which it is attached.

When in use, the hollow cylinder 12, acting as a bait retainer, is filled with bait. Such bait may comprise pellets or sweetcorn for example. The free end of the swivel 30 is connected to a fishing line of a rod and the loaded baiting device is cast into the water to be fished using the rod and line. The streamlining of the device gives it the appearance of a rocket. Its streamlined float 16 leads as it flies through the air and enables it to be thrown further. At this stage the second float 32 trails the baiting device 10, and the rings 22 and 24 are adjacent to the opening 17 of a cylinder 12.

When the device falls into the water and then starts to rise back up to the surface of the water, the float 16 tends to orient the cylinder with its opening 17 lowermost. At the same time the float 32 tends to float upwardly and slides the rings 22 and 24 along with the line portions 26 and 28 upwardly along the wires 18 and 20 towards the float 16. Bait now falls through the opening 17 and also to some extent through the holes 14.

Once the area of the water to be fished has been baited in this way, the device may be recovered by reeling in the line to which it is attached. In doing so, because the line is now attached to the device at its upper end, it will be pulled through the water with its nose directed forwardly reducing the drag on the device, the extent to which it disturbs the water, and also the time it takes to recover the device.

With the modification shown in Figure 2a, the rings 22 and 24 may be trapped in the 180° turns 40 when the device 10 is retrieved, reducing the likelihood that the device will flip round the wrong way for retrieval.

Numerous modifications and variations to the illustrated baiting device may occur to the reader without taking the resulting construction outside the scope of the present invention. To give one example only, instead of a single float 32 on the line portions 26 and 28, two spherical floats (not shown) may be provided separately from one another located respectively on the lines 26 and 28 closer to the rings 22 and 24. Fins (not shown) may be attached to or integrally moulded with the hollow cylinder 12 in such a manner that they do not obstruct the sliding movement of the rings 22 and 24. These fins (not shown) may be provided close to the opening 17, and may provide anchor points for those ends of the wires 18 and 20 which are nearer the opening 17.

The float 16 may be cone shaped instead of hemispherically shaped, with its apex or tip furthest from the hollow cylinder 12, like the nose of a rocket.

The float 16 may comprise a foam ball.

A variety of diameters and lengths for the hollow cylinder 12 is possible.

## Claims

1. A baiting device (10) for use in angling comprising a bait retainer (12) having a hollow into which bait can be inserted, at least one opening (17) of the retainer (12) through which bait can fall from the hollow when the device is in use, a float (16) secured to the retainer (12) at a position away from the said opening (17), and a line attachment (18 to 32) by which a line can be attached to the device (10), the line attachment (18 to 32) being readily movable between two positions, one of which is at or closer to the opening (17) and the other of which is at or closer to the float (16), **characterised in that** the line attachment (18 to 32) comprises at least one elongate portion (18 or 20) directly or indirectly fixed to and extending alongside the bait retainer (12) between two positions, one of which is at or closer to the said opening (17) and the other of which is at or closer to the said float (16), and at least one ring (22 or 24) which is threaded on to the said elongate portion (18 or 20) so that it can slide therealong.

2. A baiting device according to claim 1, **characterised in that** the bait retainer (12) comprises a hollow cylinder (12).

3. A baiting device according to claim 2, **characterised in that** the hollow cylinder (12) has a multiplicity of through-holes (14) through its cylindrical wall.

4. A baiting device according to claim 3, **characterised in that** the through-holes (14) are of teardrop shape with the narrower end further from the float (16).

5. A baiting device according to any preceding claim, **characterised in that** the float (16) is streamlined.

6. A baiting device according to claim 5, **characterised in that** the float (16) is hemispherical.

7. A baiting device according to any preceding claim, **characterised in that** the device (10) has a further such elongate portion (18 or 20) with a further ring (22 or 24) threaded thereon.

8. A baiting device according to any preceding claim, **characterised in that** progressing along the or each such elongate portion (18 or 20), it turns through 180°, so that it doubles back on itself, at or adjacent to the position which is at or closer to the float (16).

9. A baiting device according to any preceding claim, **characterised in that** a fishing line (26 or 28) is connected to the or each ring (22 or 24).

10. A baiting device according to claim 9, **characterised in that** there are two rings (22 and 24) with respective lengths of line (26 and 28) looped around the rings (22 and 24) at one end and attached to a fishing line at the other.

11. A baiting device according to claim 10, **characterised in that** the said respective lengths of line (26 and 28) are attached to a fishing line via a swivel (30).

12. A baiting device according to claim 10 or claim 11, **characterised in that** a further float (32) is provided adjacent to the swivel (30).

13. A baiting device according to any one of claims 10 to 12, **characterised in that** respective floats are provided, one adjacent to each ring (22 and 24).

## Patentansprüche

1. Ködervorrichtung (10) für die Verwendung beim Angeln, die einen Köderbehälter (12) mit einem Hohlraum, in den Köder eingesetzt werden kann, wenigstens einer Öffnung (17) des Behälters (12), durch die Köder aus dem Hohlraum fallen kann, wenn die Vorrichtung in Gebrauch ist, einem Schwimmer (16), der am Behälter (12) an einer Position in einem Abstand von der Öffnung (17) befestigt ist, und einer Schnurbefestigung (18 bis 32), durch die an der Vorrichtung (10) eine Schnur befestigt werden kann, umfasst, wobei die Schnurbefestigung (18 bis 32) einfach zwischen zwei Positionen beweglich ist, wovon eine sich bei oder näher bei der Öffnung (17) befindet und die andere sich bei oder näher bei dem Schwimmer (16) befindet, **dadurch gekennzeichnet, dass** die Schnurbefestigung (18 bis 32) wenigstens einen lang gestreckten Abschnitt (18 oder 20), der direkt oder indirekt an dem Köderbehälter (12) zwischen zwei Positionen befestigt ist und sich längs dessen erstreckt, wobei eine der Positionen sich bei oder näher bei der Öffnung (17) befindet und die andere der Positionen sich bei oder näher bei dem Schwimmer (16) befindet, und wenigstens einen Ring (22 oder 24), der auf den lang gestreckten Abschnitt (18 oder 20) geschraubt ist, so dass er längs dessen gleiten kann, umfasst.

2. Ködervorrichtung nach Anspruch 1, **dadurch gekennzeichnet, dass** der Köderbehälter (12) einen Hohlzylinder (12) umfasst.

3. Ködervorrichtung nach Anspruch 2, **dadurch gekennzeichnet, dass** der Hohlzylinder (12) mehrere Durchgangslöcher (14) durch seine zylindrische Wand besitzt.

4. Ködervorrichtung nach Anspruch 3, **dadurch gekennzeichnet, dass** die Durchgangslöcher (14) tränenförmig sind, wobei das schmalere Ende weiter von dem Schwimmer (16) entfernt ist.

5. Ködervorrichtung nach einem vorhergehenden Anspruch, **dadurch gekennzeichnet, dass** der Schwimmer (16) stromlinienförmig ist.

6. Ködervorrichtung nach Anspruch 5, **dadurch gekennzeichnet, dass** der Schwimmer (16) halbkugelförmig ist.

7. Ködervorrichtung nach einem vorhergehenden Anspruch, **dadurch gekennzeichnet, dass** die Vorrichtung (10) einen weiteren solchen lang gestreckten Abschnitt (18 oder 20) mit einem weiteren darauf geschraubten Ring (22 oder 24) besitzt.

8. Ködervorrichtung nach einem vorhergehenden Anspruch, **dadurch gekennzeichnet, dass** der oder jeder lang gestreckte Abschnitt (18 oder 20) auf seiner Länge eine Biegung um 180° aufweist, so dass er an oder in der Nähe der Position, die sich bei oder näher bei dem Schwimmer (16) befindet, auf sich selbst umgebogen ist.

9. Ködervorrichtung nach einem vorhergehenden Anspruch, **dadurch gekennzeichnet, dass** mit dem oder jedem Ring (22 oder 24) eine Angelschnur (26 oder 28) verbunden ist.

10. Ködervorrichtung nach Anspruch 9, **dadurch gekennzeichnet, dass** zwei Ringe (22 und 24) mit jeweiligen Schnurteilstücken (26 und 28), die an einem Ende um die Ringe (22 und 24) geschleift sind und am anderen Ende an einer Angelschnur befestigt ist, vorgesehen sind.

11. Ködervorrichtung nach Anspruch 10, **dadurch gekennzeichnet, dass** die jeweiligen Schnurteilstücke (26 und 28) an einer Angelschnur über ein Drehgelenk (30) befestigt sind.

12. Ködervorrichtung nach Anspruch 10 oder Anspruch 11, **dadurch gekennzeichnet, dass** benachbart zu dem Drehgelenk (30) ein weiterer Schwimmer (32) vorgesehen ist.

13. Ködervorrichtung nach einem der Ansprüche 10 bis 12, **dadurch gekennzeichnet, dass** jeweilige Schwimmer vorgesehen sind, wovon jeder jeweils einem Ring (22 und 24) benachbart ist.

## Revendications

1. Dispositif appât (10), pour pêche sportive, comprenant un organe de retenue d'appât (12) ayant une espace creux, dans lequel ledit appât peut être inséré, au moins une ouverture (17) de l'organe de retenue (12), par laquelle de l'appât peut tomber de l'espace creux lorsque le dispositif est en utilisation, un flotteur (16) fixé à l'organe de retenue (12) en une position écartée de ladite ouverture (17), et une fixation de ligne (18 à 32), par laquelle une ligne peut être attachée au dispositif (10), la fixation de ligne (18 à 32) étant aisément déplaçable entre deux positions, dont l'une est à l'emplacement de ladite ouverture (17) ou plus proche de lui et dont l'autre est à l'emplacement dudit flotteur (16) ou plus proche de lui, **caractérisé en ce que** la fixation de ligne (18 à 32) comprend au moins une partie allongée (18 ou 20), fixée directement ou indirectement à et s'étendant le long de l'organe de retenue d'appât (12) entre deux positions, dont l'une est à l'emplacement de ladite ouverture (17) ou plus proche de lui et dont l'autre est à l'emplacement dudit flotteur (16) ou plus proche de lui, et au moins un anneau (22 ou 24), enfilé sur ladite partie allongée (18 ou 20), de manière à pouvoir coulisser sur celle-ci.

2. Dispositif appât selon la revendication 1, **caractérisé en ce que** l'organe de retenue d'appât (12) comprend un cylindre (12) creux.

3. Dispositif appât selon la revendication 2, **caractérisé en ce que** le cylindre (12) creux présente une pluralité de trous traversants (14) ménagés à travers sa paroi cylindrique.

4. Dispositif appât selon la revendication 3, **caractérisé en ce que** les trous traversants (14) sont en forme de larmes, l'extrémité plus étroite étant plus éloignée du flotteur (16).

5. Dispositif appât selon l'une quelconque des revendications précédentes, **caractérisé en ce que** le flotteur (16) est de profil hydrodynamique.

6. Dispositif appât selon la revendication 5, **caractérisé en ce que** le flotteur (16) est hémisphérique.

7. Dispositif appât selon l'une quelconque des revendications précédentes, **caractérisé en ce que** le dispositif (10) présente une autre partie allongée (18 ou 20) de ce type, avec un autre anneau (22 ou 24) enfilé sur elle.

8. Dispositif appât selon l'une quelconque des revendications précédentes, **caractérisé en ce que**, en progressant le long de, ou de chaque telle partie allongée (18 ou 20), elle tourne de 180°, de sorte qu'elle se double en revenant sur elle-même, à ou en un emplacement adjacent à la position située au flotteur (16) ou plus proche de celui-ci.

9. Dispositif appât selon l'une quelconque des revendications précédentes, **caractérisé en ce qu'**une ligne de pêche (26 ou 28) est connectée à ou à chaque anneau (22 ou 24).

10. Dispositif appât selon la revendication 9, **caractérisé en ce qu'**il y a deux anneaux (22 et 24), ayant des longueurs respectives de ligne (26 et 28) passées en boucle autour des anneaux (22 et 24) à une extrémité et attachés à une ligne de pêche à l'autre.

11. Dispositif appât selon la revendication 10, **caractérisé en ce que** lesdites longueurs respectives de ligne (26 et 28) sont attachées à une ligne de pêche via un émerillon (30).

12. Dispositif appât selon la revendication 10 ou 11, **caractérisé en ce qu'**un autre flotteur (32) est prévu, adjacent à l'émerillon (30).

13. Dispositif appât selon l'une quelconque des revendications 10 à 12, **caractérisé en ce que** des flotteurs respectifs sont prévus, un adjacent à chaque anneau (22 et 24).
